# EUROPEAN PATENT SPECIFICATION

(11) **EP 0 550 114 B1**
(45) Date of publication and mention of the grant of the patent: **16.04.1997**
(21) Application number: 92204099.3
(22) Date of filing: 28.12.1992
(51) Int. Cl.: B65G 47/91, B66C 1/02

(54) **Device for gripping and moving articles**
Vorrichtung zum Greifen und Bewegen von Gegenständen
Dispositif pour saisir et déplacer des articles

(30) Priority: 02.01.1992 NL 9200001
(43) Date of publication of application: 07.07.1993
(73) Proprietor: ROHACO ENGINEERING B.V., NL-3433 PB Nieuwegein (NL)
(72) Inventor: Van Riet, Theodorus Petrus Maria, NL-3432 RK Nieuwegein (NL); Van Der Hijden, Augustinus Cornelius Antonius, NL-3522 JP Utrecht (NL)
(74) Representative: de Bruijn, Leendert C.

(56) References cited:
- EP-A- 0 282 700
- WO-A-90/11244
- DE-A- 3 018 082
- TRANSPORT + OPSLAG no. 2, 27 February 1992, DOETINCHEM pages 52 - 54 IR. P.J.M. BUIJSSEN 'EEN PRIMEUR VAN WERELDFORMAAT'

## Description

The invention relates to a device for depalletising piece goods, such as packages, from a pallet or pallet cage, comprising a gripping device having a number of suction cups which in the rest position lie in one plane, and which are connected in a controllable manner to a vacuum source for the vacuum suction of the suction cups, each suction cup being disposed at one end of an essentially rod-shaped element which is movable up and down in its lengthwise direction, and having a movement device for moving the gripping device in at least the lengthwise direction of the rod-shaped elements, in which the suction cups are fitted so close to each other that together they essentially form one gripper surface, and in which each suction cup is movable up and down by means of the rod-shaped element, independently of the adjacent suction cups, essentially at right angles to the gripper surface.

Such a device is disclosed in DE-A-3,018,082. This document describes a device for lifting flat wooden planks. The device comprises a griping device with a plurality of suction cups, a vacuum source and a movement device. The suction cups are mounted on one end of rods, which can, independently of adjacent rods with suction cups, slide upwards over a small distance against the action of a spring in order to compensate for irregularities of the planes.

EP-A-0,282,700 discloses a device for transporting sticky prefab planes with stepped surfaces. The device comprises a suction head with a plurality of suction tubes which are springy mounted. The suction tubes are fitted to form together a gripper surface. The suction tubes are movable upwardly against the action of a spring force.

Further, US-A-3,102,751 describes a gripping device for moving sheet material, in which only one sheet is moved at a time. This device comprises a horizontal bar, on which vertically fitted pipes are fixed so that they can slide in the vertical direction. Crossbars which rotate in a vertical plane are fixed at the underside of said pipes. One row of suction cups is fitted at the underside of each crossbar by means of rod-shaped elements positioned at right angles to the crossbar. In the rest position, in which no sheet is held, these suction cups seem to lie in one plane. The suction cups can be moved slightly in the lengthwise direction of the rod-shaped elements at right angles to the crossbar, in order to be able to compensate for slight unevennesses. Great height differences in the lengthwise direction of the horizontal bar as the result of curling of the sheet are compensated for in the case of the device according to US-A-3,102,751 through the fact that the crossbars, and thus the suction cups, are adjustable in the vertical direction relative to each other by means of the slidable pipes. Greater unevennesses in the lengthwise direction of the crossbars, provided that said unevennesses run slanting at a constant angle of inclination, can be compensated for through the crossbars being rotatable. The device according to US-A-3,102,751 also has a limit switch which energises the suction device as soon as all suction cups are pushed firmly enough against the sheet to be gripped, so that good contact between all suction cups and the sheet is ensured. This gripping device is complex in design and fragile.

The device according to US-A-3,102,751 also has the disadvantage that the suction cups cannot move entirely independently of each other, and consequently do not have sufficient freedom of movement relative to each other. This means that they cannot grip several articles simultaneously if the top surfaces on which the suction cups are to suck are at random heights which differ from each other. This becomes a problem in particular if the height differences between adjacent gripping faces are great. A further disadvantage is the great distances between adjacent suction cups. As the result of these, when articles of different shapes and random, unknown sizes are being unloaded, smaller articles which do not lie within the reach of the suction cups can fall into the space between adjacent suction cups and be crushed by the horizontal bar. Yet another disadvantage is that the downward movement of the gripping device is not stopped until all suction cups are pushed upwards slightly. As a result of this, fragile articles in particular can easily become damaged.

Other known devices also have the same disadvantages.

Situations in which several articles whose gripping surfaces for the suction cups lie at random, different levels have to be gripped are, however common in practice, for example, during the unloading of a pallet cage loaded with packages. In such pallet cages the packages, generally consisting of goods packed in boxes and/or film, are loaded in random, unknown configurations. These packages come in all sizes, which are generally no measure of the generally unknown weight of the packages.

Until now these goods (packages) have been unloaded by hand from pallets, from pallets with removable edges, or from pallet cages, and these goods are then placed on, for example, a conveyor by means of which the goods are discharged and/or sorted. This unloading of the goods is physically very hard work, and puts great strain on the unloader's back. It is also difficult to find people for this work in the evenings and at night.

The object of the invention is to provide a device for depalletising piece goods, such as packages, from a pallet or pallet cage loaded in random unknown configuration without damiging the goods to be palletised.

This object is achieved through the fact that the depalletising device further comprises sensor devices for delivering a signal to bring the gripping device to a standstill, in which the sensor devices deliver a braking signal as soon as any suction cup has moved from its rest position over a first predetermined distance.

Due to the fact that the suction cups lie relatively close together, for example in a matrix or lozenge-shaped pattern, together they form an, as it were, continuous gripper surface. Since the suction cups are each independently movable back and forth by means of a rod-shaped guide element, this gripper surface when gripping assumes the unknown, irregular shape of the face in which the goods to be gripped are situated. This gripper surface can be moved by means of the movement device to the goods to be gripped, at least a number of these suction cups being moved by means of said guides in the opposite direction relative to the gripper surface as soon as they make contact with goods. The gripper surface of such a device can, for example, descend from the top, into the earlier mentioned pallet cage and then grip a number of the top boxes with the suction cups and lift them out of the pallet cage. When the gripped goods are being deposited in the vertical direction, the mobility of the suction cups ensures that the height of fall of the smaller gripped goods is not too great during the unloading, so that damage to smaller goods is avoided.

In order to ensure that the depalletising device cannot damage the goods to be gripped by pushing the gripping device against the goods with too great force, it is a great advantage that the device has sensor devices for delivering a braking signal to bring the gripping device to a standstill as soon as a suction cup has moved out of its rest position over a first predetermined distance. Damage is prevented in this case through the fact that, both during gripping and during depositing of goods, the gripping device is brought to a standstill before one or more suction cups have moved over their maximum distance.

According to an advantageous embodiment of the device according to the invention, the sensor devices deliver a second signal as soon as a suction cup has moved from its rest position over a second predetermined distance, said second distance being greater than the first distance, and the braking signal gradually bringing the gripping device to a standstill, while the second signal brings the device abruptly to a standstill. The first braking signal in this case brings the gripping device carefully to a standstill, while the second signal, for example, puts a sort of emergency brake into action if the gripping device has not come to a standstill in time.

It is very practical according to the invention also to control at least the connection of the moved suction cups to the vacuum source or to switch on and off the vacuum suction by means of such a (for example, first or second) signal.

According to an advantageous embodiment, the distance over which a suction cup can be moved up and down is at least a considerable part of the distance between adjacent suction cups. In other words, the vertical distance, for example, over which a suction cup is movable back and forth (up and down) is not small compared with the horizontal distance in this case between adjacent suction cups. For the distance between adjacent suction cups the centre-to-centre distance and also the edge-to-edge distance can be taken in this case. Small is understood to be, for example, less than 10%, while, for example, 50% is large (not small). The boundary between small and not small depends, inter alia, on the sizes of the goods to be gripped, the height difference required to be overcome when the goods are being gripped, the permitted height of fall when the goods are being deposited etc.

It is advantageous according to the invention if the distance over which a suction cup is movable up and down is at least half, and preferably greater than, the distance between the suction cup concerned and an adjacent suction cup. The distance between the suction cups can in this case be selected in such a way, for example depending on the smallest goods to be depalletised, that no smaller goods can fall into the spaces between the suction cups while, through the relatively great mobility of the suction cups with respect to the distance between said cups, a number of larger goods projecting higher and smaller or larger goods lying lower down can also be gripped simultaneously. In the course of depositing, for example, fragile goods it is also important that the mobility of the suction cups should be such that the height of fall is not too great.

Since it can happen that not every suction cup makes contact with an article, it is preferable if means are fitted for each suction cup to shut off the connection between said suction cup and the vacuum source in the event of no contact or inadequate contact between a suction cup and the article to be gripped, with the result that the suction cups are provided with a vacuum independently of each other. For, otherwise an entrained air flow could be sucked up by a suction cup, causing the other suction cups to lose suction power, and necessitating a great compressor capacity for the vacuum suction.

It is also advantageous if the suction cups can be pushed away along the abovementioned guides against the action of a spring when they encounter an article or when the article is being deposited. Such a spring ensures that the suction cups are subsequently easily returned to their rest position.

The invention will be explained in greater detail below with reference to an example and figures, in which:
Figure 1 shows a view, partially in cross-section, of a part of a gripping device according to the invention;
Figure 2 shows a diagrammatic illustration in phases, sub-divided into Figures 2a, 2b, 2c and 2d, of the way in which the gripping device according to the invention works; and
Figure 3 shows a bottom view of a gripping device according to the invention.

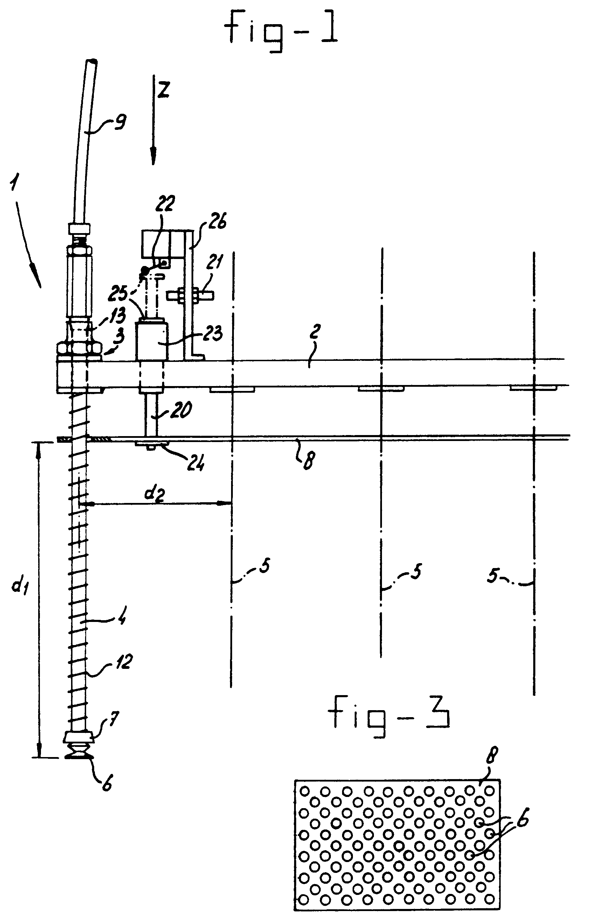

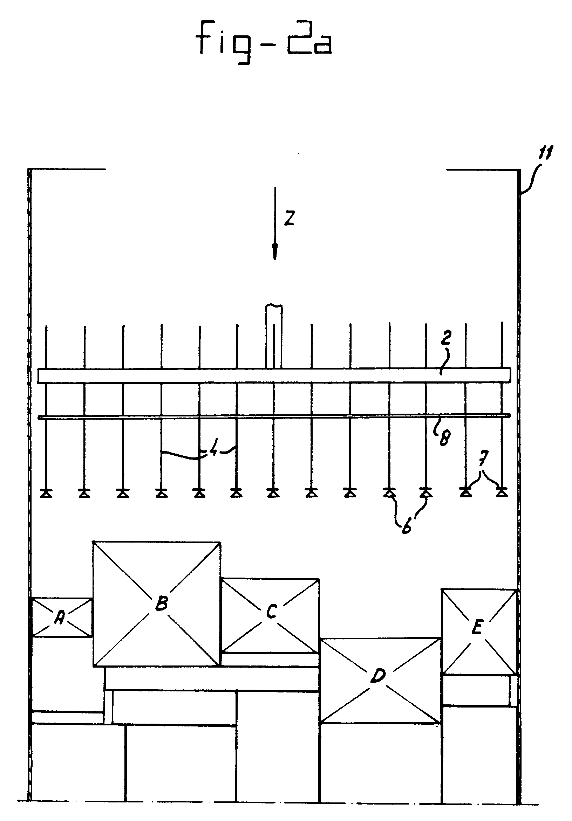

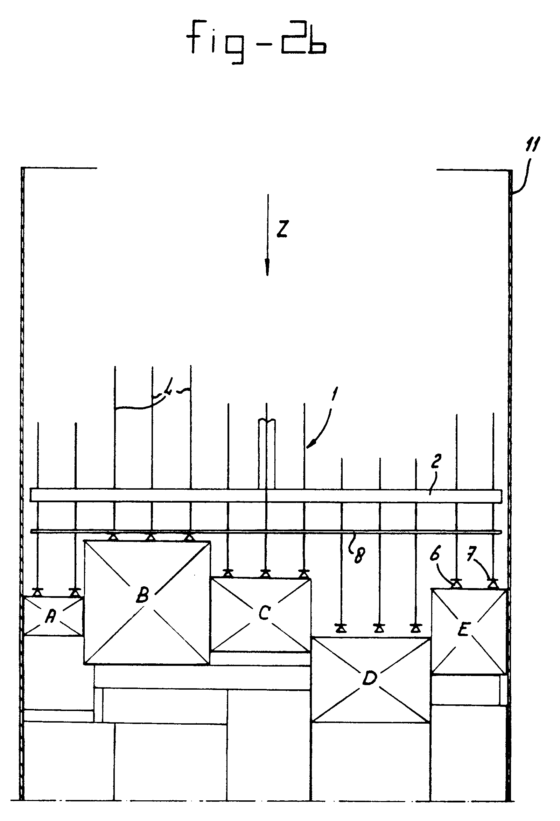

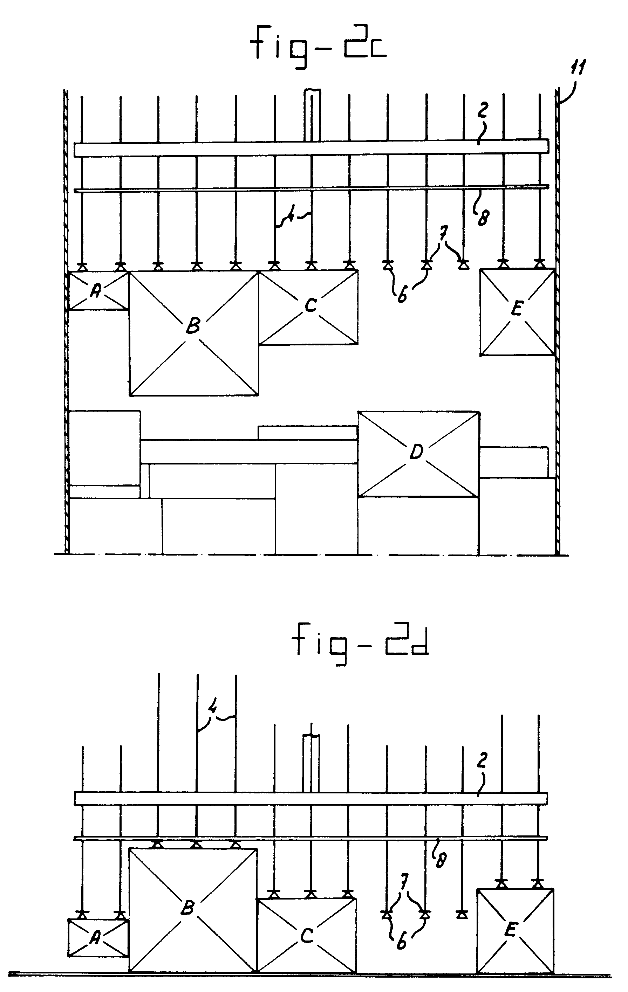

Figure 1 shows as an example a part of a gripping device 1 according to the invention. In this figure number 2 is the frame plate of the gripping device 1. This frame plate 2 is fixed in a manner not shown to a movement device, likewise not shown, which movement device can move the gripping device 1 at least in the direction of the arrow Z and the opposite direction thereto. The surface area of the frame plate 2, and of the gripper surface in the rest position, is essentially equal to the surface area at right angles to the direction of the arrow Z in which the articles to be moved are situated or have to be placed. In the case of a pellet (cage) this surface area is preferably approximately equal to the horizontal bottom face of the pellet (cage).

Fixed on the frame plate 2 are shafts (rod-shaped elements) 4 which are movable by means of bushes 3 in the direction Z, against the action of a spring 12. One of such shafts 4 is shown, while the other identical shafts are indicated by means of axes 5. A suction cup 6 is fixed at the bottom side of each movable shaft 4. The distances between the individual shafts 4 are such that the suction cups 6 together form the so-called gripper surface, while the space between the suction cups is such that the smaller articles do not fit into it. The distance d1 over which a suction cup 6 can be moved, and which is a considerable part of the distance d2 between adjacent suction cups, is even markedly greater here than the distance d2 between adjacent suction cups. The distance d2 can be, for example, 4 to 8 cm, while the distance d1 can be, for example, 10 to 30 cm. These values for d1 and d2 have been found suitable for the unloading of pallet cages with smaller packages. However, in the case of large articles d2 can easily be 20 cm or more, while d1 can then be, for example, 25 cm, 50 cm or even more than 150 cm.

The gripper surface can be filled, for example in a matrix pattern, with suction cups, but the suction cups 6 can also be disposed in a lozenge-shaped pattern, as shown in bottom view in Figure 3. Many suction cup patterns are conceivable.

A detector plate 8 is fitted below the frame plate 2. This detector plate 8 is suspended from the frame plate 2 by means of a number of pins 20 with widened heads 25. The pins 20 are fixed at one side to the detector plate 8 by fixing means 24, and at the other side can slide into bushes 25 fixed on the frame plate 2. This suspended fixing is thus such that the detector plate 8 can be moved towards the frame plate 2, in which case the pin 25 can assume the position shown by dashed and dotted lines. A rectangular detector plate can be suspended by, for example, four pins fitted at the corners.

Part of the functioning of this gripping device 1 will now be explained in further detail with reference to the one shaft 4 with suction cup 6 shown (Figure 1), it being assumed that only this one suction cup 6 shown will grip an article (product).

The movement device moves the gripping device 1, and thus the frame plate 2, the shaft 4 and the suction cup 6 downwards. When the suction cup 6 encounters an article, said article stops the suction cup 6, and thus the shaft 4 connected thereto. As a result of the mounting of the shaft 4 in the bush 3, the frame plate 2 simply moves further, compressing the spring 12, until the protective cap 7 knocks against the detector plate 8 suspended by means of pins 20 from the frame plate 2. A sensor 21 fitted on an attachment 26 records that the detector plate 8 is being lifted up by the protective cap 7, and then sends a braking signal (first signal) to the movement device. The movement device then brakes the movement of the frame plate 2 and brings it to a standstill. During this braking the detector plate 8 is lifted a little (further). As an emergency provision, a sensor, in the form of a switch 22, is fitted in this case on the attachment 26, which sensor on contact with a pin 20, by means of a second signal, brings the movement of the frame plate 2 abruptly to a standstill.

As soon as the frame plate 2 has come to a standstill, the suction cup 6 is vacuum-sucked by means of suction hose 9 by a vacuum source (not shown). This vacuum suction can be activated if necessary by the braking signal after a delay. If the frame plate 2 is then moved upwards in the opposite direction by the movement device, the shaft 4 will first be slid back, as a result of the weight of the article gripped by the suction cup 6 and the action of the compressed spring 12, until the stop 13 fixed at the top side of the shaft rests against the bush 3. Thereafter, the article held by the suction cup 6 will be lifted.

The gripping device 1 can now be moved to a desired place by means of the movement device. At this place the frame plate 2, together with the shaft 4, the suction cup 6 and the article hanging thereon, are moved down again. As soon as the article touches the ground or another base, the shaft 4 will be pushed up again, in which case the spring 12 is compressed until the protective cap 7 makes contact with the detector plate 8, so that the frame plate 2 is braked and brought to a standstill. Thereafter, preferably not until after the frame plate has come to a standstill, the vacuum will be removed from the suction cup 6, and the frame plate 2 will be moved up again, leaving behind the moved article, while the shaft 4 is pushed back by the compressed spring 12 until stop 13 is resting against the bush 3 again. Another article can then be picked up again. The vacuum in the suction cups can also be removed while articles are being deposited, using the braking signal and preferably a delay switch.

It will now be shown diagrammatically in Figure 2, with reference to an example with a pallet cage 11 filled with different boxes (inter alia, A to E), how the gripping device can simultaneously grip various boxes of differing sizes and with gripping faces situated at different levels, and can carefully deposit them elsewhere. The sensor devices 20, 21 and 22 are not shown in Figure 2, since many other sensor devices are also conceivable for this.

Figure 2a shows the first phase, in which the frame plate 2, together with the diagrammatically shown shafts 4 and suction cups 6, is moved downwards in the direction of arrow Z towards the boxes A to E. Box B will be the first to make contact with a number of suction cups 6, with the result that the shafts 4 belonging to these suction cups 6 slide up relative to the downward moving frame plate 2. Boxes C, E and A will then make contact in succession with a number of suction cups 6, with the result that the shafts 4 belonging to these will also be slid up relative to the downward moving frame plate 2, until the protective caps 7 on the shafts 4 whose suction cups 6 make contact with box B lift up the detector plate 8. The frame plate 2 is then brought to a standstill, which last-mentioned phase is shown in Figure 2b.

The vacuum source will now vacuum-suck the suction cups 6, preferably after braking, with the result that the boxes A, B, C and E are gripped. This vacuum suction can be controlled by, for example, the braking signal. It is important here that the suction cups 6 should be provided with a vacuum independently of each other, because the suction cups 6 which are situated above box D would otherwise suck up entrained air, which can reduce the suction force of the other suction cups 6. This independence can be achieved in many different ways, for example by shutting off, in a manner not shown, the suction hoses 9 (Figure 1) (not shown in Figure 2) of the suction cups above box D.

As soon as the suction cups 6 are vacuum-sucked, the frame plate 2 is moved upwards and, through the weight of the boxes, the shafts 4 first move downwards until the stops are resting again on the bushes (13 and 3 respectively, Figure 1), and the boxes A, B, C and E, which are gripped by the suction force, are then lifted. This last phase is shown in Figure 2c.

The boxes A, B, C and E can now be conveyed by means of the movement device to a desired place, where they are deposited. Box B will go on the ground first, the shafts 4 of the suction cups 6 concerned moving up relative to the frame plate 2. Box E and box C will then go on the ground in succession, and the shafts 4 of the suction cups 6 concerned will also move up relative to the frame plate 2, until the protective caps 7 of the suction cups 6 by which box B is being held lift up the detector plate 8, and the frame plate 2 is brought to a standstill. Figure 2d shows the phase in which the frame plate 2 has come to a standstill. In this Figure 2d it can be seen that the box A is still suspended above the ground, and that it will drop a little as soon as the vacuum is removed from the suction cups 6. However, this distance is reduced by sliding in the shafts 4 on which the boxes B, C and E are held. The removal of the vacuum from the suction cups 6 can be controlled by, for example, the braking signal.

The maximum height difference between the top gripping surfaces of the boxes to be gripped can be adjusted by, for example, altering the length of the shafts 4 and/or the distance between the detector plate 8 and the frame plate 2. It is even conceivable to reduce the height of fall during unloading of the boxes by reducing the distance between the detector plate 8 and the frame plate 2 just before unloading.

It is clear that neither height differences between the gripping surfaces nor unequal spaces between the gripping surfaces give rise to problems for a device according to the invention.

It will also be clear that the example outlined above is only one of the many possible embodiments and potential applications of the invention. The device according to the invention can be used for unloading goods which can be stored in many different ways, for example in containers, in crates, on pallets etc. Instead of the detector plate, it is also possible to provide means for each suction cup and shaft, which deliver a signal a soon a a suction cup has moved over a certain distance.

It is, for example, also very easily possible to turn the gripping device 90° from the example explained, so that the gripper surface is in the vertical plane instead of the horizontal plane. In this way it is possible to unload, for example, maritime containers through an opening in a vertical side wall.

It is also very easily possible to use the device according to the invention for the loading of, for example, pallet cages.

## Claims

1. Device for depalletising piece goods, such as packages, from a pallet or pallet cage (11), comprising a gripping device (1) having a number of suction cups (6) which in the rest position lie in one plane, and which are connected in a controllable manner to a vacuum source for the vacuum suction of the suction cups (6), each suction cup (6) being disposed at one end of an essentially rod-shaped element (4) which is movable up and down in its lengthwise direction, and having a movement device for moving the gripping device (1) in at least the lengthwise direction of the rod-shaped elements, in which the suction cups (6) are fitted so close to each other that together they essentially form one gripper surface, and in which each suction cup (6) is movable up and down by means of the rod-shaped element (4), independently of the adjacent suction cups, essentially at right angles to the gripper surface, characterised in that the depalletising device further comprises sensor devices (8,20,21,22) for delivering a signal to bring the gripping device to a standstill, in which the sensor devices (8, 20, 21, 22) deliver a braking signal as soon as any suction cup has moved from its rest position over a first predetermined distance.

2. Device according to Claim 1, characterised in that the sensor devices (8, 20, 21, 22) deliver a second signal as soon as any suction cup has moved from its rest position over a second predetermined distance, said second distance being greater than the first distance, and the braking signal gradually bringing the gripping device to a standstill, while the second signal brings the device abruptly to a standstill.

3. Device according to one of Claims 1 - 2, characterised in that the first signal further controls the connection of at least the moved suction cups to the vacuum source and/or switches the vacuum source on and off.

4. Device according to one of Claims 1 - 3, characterised in that the sensor devices comprise detection devices (21, 22) and a detector plate (8), the rod-shaped elements (4) being slidable back and forth by the detector plate (8) and having transversely projecting parts (7) which make contact with the detector plate (8) when the suction cup concerned has been moved sufficiently, while the detection devices (21, 22) deliver a signal as a result thereof.

5. Device according to one of Claims 1 - 4, characterised in that the distance (d1) over which a suction cup (6) is movable up and down is a substantial part of the distance (d2) between adjacent suction cups.

6. Device according to one of Claims 1 - 5, characterised in that the distance (d1) over which a suction cup is movable up and down is at least half, and is preferably greater than, the distance (d2) between the suction cup concerned and an adjacent suction cup.

7. Device according to Claims 1 - 6, characterised in that means are provided for each suction cup so that if there is no contact or inadequate contact between a suction cup and the article to be gripped, the connection between said suction cup and the vacuum source can be shut off, with the result that the suction cups are provided with a vacuum independently of each other.

8. Device according to one of Claims 1 - 7, characterised in that a suction cup (6) can be pushed away against the action of a spring (12) when it encounters an article.

## Patentansprüche

1. Vorrichtung zum Depalettisieren von Stuckgut, zum Beispiel Paketen, von einer Palette oder einem Palettengehäuse (11), umfassend eine Greifvorrichtung (1) mit einer Anzahl von Saugköpfen (6), die in der Ruhestellung in einer Ebene liegen, und die mit einer Vakuumquelle für die Vakuumsaugwirkung der Saugköpfe (6) gesteuert verbunden ist, wobei jeder Saugkopf (6) an einem Ende eines im wesentlichen stangenförmigen Elementes (4) angeordnet ist, das in seiner Langsrichtung auf- und ab bewegbar ist, und eine Antriebsvorrichtung zum Bewegen der Greifvorrichtung (1) zumindest in Längsrichtung der stangenförmigen Elemente aufweist, in der die Saugköpfe (6) so eng zueinander eingepaßt sind, daß sie zusammen im wesentlichen eine Greiffläche bilden, und in der jeder Saugkopf (6) mittels des stangenförmigen Elementes (4) unabhängig von benachbarten Saugköpfen im wesentlichen in rechtem Winkel zur Greiffläche auf- und ab bewegbar ist, dadurch gekennzeichnet, daß die Depalettisierungsvorrichtung ferner Abtastvorrichtungen (8, 20, 21, 22) zur Abgabe eines Signals umfaßt, um die Greifvorrichtung zum Stillstand zu bringen, wobei die Abtastvorrichtungen (8, 20, 21, 22) ein Bremssignal abgeben, sobald irgendein Saugkopf sich aus seiner Ruheposition über eine erste vorbestimmte Wegstrecke bewegt hat.

2. Vorrichtung nach Anspruch 1, dadurch gekennzeichnet, daß die Abtastvorrichtungen (8, 20, 21, 22) ein zweites Signal abgeben, sobald irgendein Saugkopf sich aus seiner Ruheposition über eine zweite vorbestimmte Wegstrecke bewegt hat, wobei die zweite Wegstrecke größer ist als die erste Wegstrecke, und daß das Bremssignal die Greifvorrichtung graduell zum Stillstand bringt, während das zweite Signal die Vorrichtung abrupt zum Stillstand bringt.

3. Vorrichtung nach einem der Ansprüche 1 oder 2, dadurch gekennzeichnet, daß das erste Signal ferner die Verbindung zumindest der bewegten Saugköpfe mit der Vakuumquelle steuert und/oder die Vakuumquelle ein- und ausschaltet.

4. Vorrichtung nach einem der Ansprüche 1 bis 3, dadurch gekennzeichnet, daß die Abtastvorrichtungen Feststellvorrichtungen (21, 22) und eine Detektorplatte (8) umfassen, wobei die stangenförmigen Elemente (4) durch die Detektorplatte (8) vor- und zurückverschiebbar sind und quer vorstehende Teile (7) aufweisen, die mit der Detektorplatte (8) in Berührung kommen, wenn der betreffende Saugkopf sich genügend weit bewegt hat, während die Feststellvorrichtungen (21, 22) als Ergebnis dessen ein Signal liefern.

5. Vorrichtung nach einem der Ansprüche 1 bis 4, dadurch gekennzeichnet, daß die Wegstrecke (d1), über die ein Saugkopf (6) auf- und ab bewegbar ist, im wesentlichen ein Teil der Wegstrecke (d2) zwischen benachbarten Saugköpfen ist.

6. Vorrichtung nach einem der Ansprüche 1 bis 5, dadurch gekennzeichnet, daß die Wegstrecke (d1), über die ein Saugkopf auf- und ab bewegbar ist, mindestens die Hälfte, vorzugsweise größer als die Wegstrecke (d2) zwischen dem betreffenden Saugkopf und einem benachbarten Saugkopf ist.

7. Vorrichtung nach den Ansprüchen 1 bis 6, dadurch gekennzeichnet, daß Vorrichtungen für jeden Saugkopf vorgesehen sind, so daß, wenn kein Kontakt oder unzureichender Kontakt zwischen einem Saugkopf und dem zu greifenden Gegenstand vorhanden ist, die Verbindung zwischen dem Saugkopf und der Vakuumquelle mit dem Ergebnis abgeschaltet werden kann, daß die Saugköpfe unabhängig voneinander an ein Vakuum angeschlossen werden können.

8. Vorrichtung nach einem der Ansprüche 1 bis 7, dadurch gekennzeichnet, daß ein Saugkopf (6) entgegen der Wirkung einer Feder (12) weggedrückt werden kann, wenn er auf einen Gegenstand trifft.

## Revendications

1. Dispositif pour la dépalettisation de produits tels que des paquets, depuis une palette ou une cage (11), comprenant un dispositif de prise (1) comportant un certain nombre de ventouses (6) qui, en position de repos, sont situées dans le même plan, et qui sont connectées de manière contrôlable à une source de vide pour créer une aspiration dans les ventouses (6), chaque ventouse (6) étant disposée à l'extrémité d'un élément (4) ayant la forme générale d'une tige, qui est déplaçable vers le haut et vers le bas dans sa direction longitudinale, et un dispositif de déplacement pour déplacer le dispositif de prise (1) dans au moins la direction longitudinale des éléments en forme de tiges, et dans lequel les ventouses (6) sont montées proches l'une de l'autre au point qu'elles forment ensemble pratiquement une surface de prise, et dans lequel chaque ventouse (6) peut être déplacée vers le haut et vers le bas au moyen des éléments en forme de tiges (4) indépendamment des ventouses voisines, essentiellement à angle droit par rapport à la surface de prise,
caractérisé en ce que le dispositif de dépalettisation comprend au surplus des dispositifs palpeurs (8, 20, 21, 22) fournissant un signal amenant le dispositif de prise au repos, dans lequel les dispositifs palpeurs (8, 20, 21, 22) délivrent un signal de freinage dès qu'une ventouse quelconque s'est déplacée d'une première distance prédéterminée depuis sa position de repos.

2. Dispositif selon la revendication 1, caractérisé en ce que les dispositifs palpeurs (8, 20, 21, 22) délivrent un second signal dès qu'une ventouse quelconque s'est déplacée d'une seconde distance prédéterminée depuis sa position de repos, ladite seconde distance étant plus grande que la première distance, et le signal de freinage amène graduellement au repos le dispositif de prise tandis que le second signal amène brusquement au repos le dispositif.

3. Dispositif selon l'une des revendications 1 - 2, caractérisé en ce que le premier signal contrôle au surplus la connexion d'au moins les ventouses déplacées avec la source de vide et / ou commute la source de vide entre la position active et la position non active.

4. Dispositif selon l'une des revendications 1 - 3, caractérisé en ce que les dispositifs palpeurs comprennent des dispositifs de détection (21, 22) et une plaque détectrice (8), les éléments en forme de tiges (4) pouvant être glissés en avant et en arrière par la plaque détectrice (8), et ayant des éléments dépassant transversalement (7) qui assurent le contact avec la plaque détectrice (8) quand la ventouse concernée s'est déplacée suffisamment, tandis que les dispositifs de détection (21, 22) délivrent un signal en résultant.

5. Dispositif selon l'une des revendications 1 - 4, caractérisé en ce que la distance (d1) sur laquelle une ventouse (6) est déplaçable vers le haut ou le bas est une fraction substantielle de la distance (d2) entre des ventouses voisines.

6. Dispositif selon l'une des revendications 1 - 5, caractérisé en ce que la distance (d1) sur laquelle une ventouse (6) est déplaçable vers le haut ou vers le bas est au moins la moitié, et de préférence supérieure à la distance (d2) entre la ventouse concernée et une ventouse voisine.

7. Dispositif selon l'une des revendications 1 - 6, caractérisé en ce que des moyens sont prévus pour chaque ventouse de manière que s'il n'y a aucun contact, ou un contact inadéquat entre une ventouse et un article à prendre, la connexion entre ladite ventouse et la source de vide est coupée, les ventouses étant ainsi mises sous vide indépendamment l'une de l'autre.

8. Dispositif selon l'une des revendications 1 - 7, caractérisé en ce qu'une ventouse (6) peut être repoussée à l'encontre de l'action d'un ressort (12) quand elle rencontre un article.
